# FASCICULE DE BREVET EUROPEEN

(11) **EP 2 496 795 B1**
(45) Date de publication et mention de la délivrance du brevet: **01.04.2015**
(21) Numéro de dépôt: 10771484.2
(22) Date de dépôt: 02.11.2010
(51) Int. Cl.: F01D 25/24, F01D 25/28, F02C 7/00, F02K 3/06

(54) **TURBOMACHINE A DOUBLE FLUX POUR AERONEF, COMPRENANT DES MOYENS STRUCTURAUX DE RIGIDIFICATION DU CARTER CENTRAL**
DOPPELSTRÖMIGE TURBOMASCHINE FÜR LUFTFAHRZEUG, MIT STRUKTURVERSTEIFUNGSMITTEL FÜR ZENTRALGEHÄUSE
DOUBLE-FLOW TURBOMACHINE FOR AIRCRAFT, COMPRISING STRUCTURAL STIFFENING MEANS OF THE CENTRAL CASING

(30) Priorité: 04.11.2009 FR 0957800
(43) Date de publication de la demande: 12.09.2012
(73) Titulaire: Snecma, 75015 Paris (FR)
(72) Inventeur: GREDE, Audrey, 77170 Brie Comte Robert (FR); DERENES, Jacky, Raphaël, Michel, F-91100 Corbeil-Essonnes (FR); REAUX, Clarisse, Savine, Mathilde, F-10100 Saint Martin de Bossenay (FR); SEIZE, Guilhem, 94230 Cachan (FR)
(74) Mandataire: Ilgart, Jean-Christophe
(86) Numéro de dépôt international: PCT/EP2010/066609
(87) Numéro de publication internationale: WO 2011/054806

(56) Documents cités:
- EP-A1- 1 571 081
- EP-A1- 1 902 952
- EP-A1- 2 022 973
- EP-A2- 1 568 868
- WO-A1-02/29252

## Description

La présente invention se rapporte de façon générale à une turbomachine à double flux pour aéronef, de préférence du type turboréacteur.

Sur ces turbomachines, une problématique connue réside dans la flexion du carter central renfermant le générateur des gaz, cette flexion selon l'axe transversal ayant pour conséquence d'accélérer l'usure des aubes tournantes de compresseur, et donc d'augmenter les jeux en bout d'aubes. Cet effet a pour conséquence une baisse importante du rendement global de la turbomachine.

Les documents EP1902952 et EP1568868 divulguent des turbomachines à double flux de l'art antérieur.

Pour faire face à ce problème de flexion du carter central, l'invention propose conformément à la revendication 1 une turbomachine à double flux pour aéronef comprenant :
- un carter intermédiaire comportant une virole intérieure et une virole extérieure entre lesquelles sont agencés des bras structuraux, la virole intérieure présentant une première surface de délimitation interne d'une veine secondaire annulaire ;
- un carter central prolongeant ledit carter intermédiaire vers l'arrière ; et
- des moyens formant enveloppe agencés dans le prolongement arrière de ladite virole intérieure du carter intermédiaire et disposés autour dudit carter central, ces moyens présentant une seconde surface de délimitation interne de la veine secondaire annulaire se situant dans le prolongement arrière de ladite première surface de délimitation interne.

Selon l'invention, lesdits moyens formant enveloppe comportent d'une part une virole amont structurale montée sur la virole intérieure du carter intermédiaire et définissant la partie avant de la seconde surface de délimitation interne, et d'autre part une enveloppe principale prolongeant vers l'arrière ladite virole amont. De plus, ladite turbomachine comporte des moyens structuraux de rigidification du carter central, entourés par ladite enveloppe principale, et s'étendant vers l'arrière entre la virole amont et le carter central sur lesquels ces moyens sont montés.

Par conséquent, l'invention propose une solution simple, astucieuse et peu encombrante permettant de limiter la flexion du carter central durant le fonctionnement de la turbomachine, impliquant donc une augmentation des performances globales de celle-ci.

Selon un premier mode de réalisation préféré de la présente invention, lesdits moyens structuraux de rigidification du carter central prennent la forme d'une structure annulaire ajourée.

Selon un second mode de réalisation préféré de la présente invention, lesdits moyens structuraux de rigidification du carter central prennent la forme d'une pluralité de bielles espacées circonférentiellement les unes des autres.

De préférence, lesdits moyens structuraux de rigidification du carter central s'étendent sensiblement parallèlement à l'axe longitudinal de la turbomachine.

De préférence, ladite enveloppe principale comporte une pluralité de panneaux aérodynamiques montés sur des longerons de support rapportés à leur extrémité avant sur la virole interne structurale, et à leur extrémité arrière sur un anneau de support se trouvant à proximité d'une jonction entre ledit carter central et un carter d'échappement le prolongeant vers l'arrière.

De préférence, lesdits moyens structuraux de rigidification du carter central sont montés sur une partie de celui-ci située au droit d'une zone de jonction entre un compresseur et une chambre de combustion de la turbomachine.

De préférence, la turbomachine comprend un compresseur haute pression centrifuge, permettant, au droit d'une extrémité aval de celui-ci, d'éloigner au maximum le carter central de l'axe longitudinal du moteur. Cette partie du carter central peut alors, comme mentionné ci-dessus, être employée pour le raccordement des moyens structuraux de rigidification.

D'autres avantages et caractéristiques de l'invention apparaîtront dans la description détaillée non limitative ci-dessous.

Cette description sera faite au regard des dessins annexés parmi lesquels ;
- la figure 1 représente une vue schématique en demi-coupe longitudinale d'un turboréacteur à double flux pour aéronef, selon un premier mode de réalisation préféré de la présente invention ;
- la figure 2 représente une vue partielle en coupe détaillant les moyens structuraux de rigidification du carter central du turboréacteur montré sur la figure précédente ;
- la figure 3a représente une vue en perspective de moyens formant enveloppe délimitant intérieurement la veine secondaire du turboréacteur montré sur la figure 1 ;
- la figure 3b représente une vue éclatée de celle de la figure 3a ; et
- les figures 4 et 5 montrent des vues respectivement similaires à celles des figures 2 et 3a, avec le turboréacteur se présentant sous la forme d'un second mode de réalisation préféré de la présente invention.

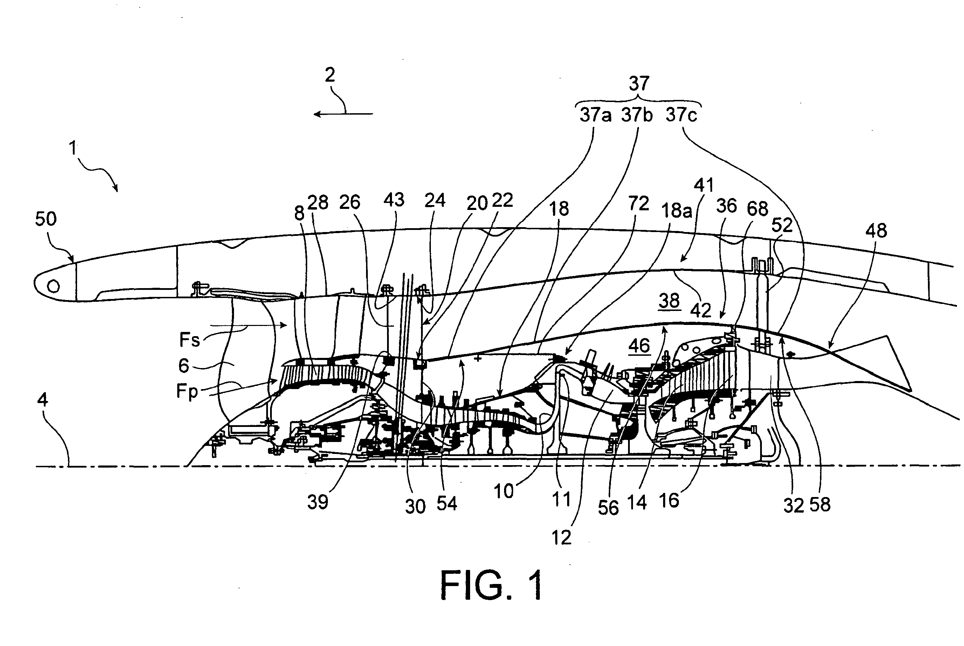

En référence tout d'abord à la figure 1, on peut apercevoir un turboréacteur d'aéronef 1 selon un premier mode de réalisation préféré. Dans toute la description qui va suivre, les termes « avant » et « arrière » sont à considérer par rapport à une direction d'avancement de l'aéronef provoquée par la poussée du turboréacteur, cette direction étant représentée schématiquement par la flèche 2. D'autre part, les termes « amont » et « aval » sont à considérer par rapport à une direction d'écoulement principale des gaz au sein du turboréacteur, contraire à la direction d'avancement 2 de l'aéronef.

Le turboréacteur 1, d'axe longitudinal 4, comporte d'amont en aval une soufflante 6, un compresseur basse pression 8, un compresseur haute pression 10, une chambre annulaire de combustion 12, une turbine haute pression 14 et une turbine basse pression 16. Les compresseurs, les turbines et la chambre de combustion constituent le générateur des gaz, qui est fermé en partie par un carter central 18 centré sur l'axe 4, et qui est traversé par un flux primaire Fp du turboréacteur.

Le compresseur haute pression 10 est ici centrifuge, et comprend donc un rouet centrifuge qui permet, au droit d'une extrémité aval de ce rouet, d'éloigner radialement au maximum le carter central 18 de l'axe 4. Il en découle la présence d'une partie 18a du carter central, située au droit d'une zone de jonction 11 entre le rouet centrifuge et la chambre de combustion 12, qui se trouve donc éloignée radialement de l'axe 4, en saillie vers l'extérieur par rapport à ses parties adjacentes amont et aval.

Ce carter central 18 prolonge vers l'arrière un carter intermédiaire 20 équipé d'une virole intérieure 22 et d'une virole extérieure 24 concentriques, entre lesquelles sont agencés des bras structuraux 26 qui les relient. La virole extérieure 24 se situe dans le prolongement aérodynamique arrière du carter de soufflante 28, tandis que la virole intérieure 22 se situe radialement vers l'extérieur par rapport à l'extrémité avant du carter central 18, fixée sur un moyeu 30 du carter intermédiaire.

En outre, l'extrémité arrière du carter central 18 est prolongée par un carter d'échappement 32 situé en aval de la turbine basse pression 16.

L'ensemble des carters précités sont fixés les uns aux autres, afin de former conjointement une structure à travers laquelle transitent des efforts statiques et dynamiques.

Des premiers moyens 36 formant enveloppe sont agencés dans le prolongement aérodynamique arrière de la virole intérieure 22, en étant disposés autour du carter central 18. Ces moyens, dénommés en anglais « Inner Fan Duct », présentent extérieurement une surface annulaire 37 de délimitation interne d'une veine secondaire annulaire 38, traversée par le flux secondaire Fs du turboréacteur. La surface 37 se situe dans le prolongement aérodynamique arrière d'une autre surface 39 servant également à la délimitation interne de la veine secondaire annulaire 38, cette surface 39 étant définie par la virole intérieure 22. En outre, en aval de la surface 37 se trouve un mélangeur 48 dont la fonction connue réside dans le mélange des flux primaire Fp et secondaire Fs.

L'espace annulaire 46 laissé libre entre le carter central 18 et les premiers moyens formant enveloppe remplit la fonction de compartiment, dit « compartiment Core », dans lequel sont agencés des équipements.

Des seconds moyens 41 formant enveloppe sont agencés concentriquement et extérieurement aux premiers moyens 36 précités, dans le prolongement aérodynamique arrière de la virole extérieure 24. Ces moyens, dénommés en anglais « Outer Fan Duct », présentent intérieurement une surface annulaire 42 de délimitation externe de la veine 38. La surface 42 se situe dans le prolongement aérodynamique arrière d'une' autre surface 43 servant également à la délimitation externe de la veine secondaire annulaire 38, cette surface 43 étant définie par la virole extérieure 24. Ces seconds moyens formant enveloppe sont de préférence fixés à la nacelle 50. De plus, ils sont reliés au carter d'échappement 32 par une pluralité de bielles 52 reliées à ce dernier, agencées dans un plan transversal du turboréacteur et traversant lesdits premiers moyens 36 formant enveloppe, dont la liaison avec le mélangeur 48 se situe en aval de ces bielles 52.

Pour ce qui concerne les premiers moyens 36 formant enveloppe, ils se décomposent en trois parties adjacentes axialement, la première étant une virole amont structurale 54, la seconde une enveloppe principale 56 de préférence non-structurale, et la troisième un anneau 58 de jonction aérodynamique entre l'enveloppe principale 56 et le mélangeur 48.

En référence à présent aux figures 1 à 3b, la virole structurale amont 54, de préférence métallique, s'étend sensiblement parallèlement à l'axe 4 sur lequel elle est centrée. Son extrémité avant est fixée par bride sur l'extrémité arrière de la virole intérieure 22 du carter intermédiaire, de manière à ce que la surface aérodynamique 39 se situe dans la continuité avant de la partie avant 37a de la surface de délimitation interne 37 de la veine secondaire annulaire 38.

Son extrémité arrière est quant à elle fixée à l'extrémité avant de l'enveloppe principale 56, de manière à ce que la surface aérodynamique 37a se situe dans la continuité avant de la partie principale 37b de la surface de délimitation interne 37, définie par l'enveloppe 56.

En outre, l'anneau 58 de jonction aérodynamique entre l'enveloppe principale 56 et le mélangeur 48 présente une extrémité avant fixée sur l'extrémité arrière de l'enveloppe principale 56, de manière à ce que la surface aérodynamique 37b se situe dans la continuité avant de la partie arrière 37c de la surface de délimitation interne 37, définie par cet anneau 58. L'anneau 58 présente des échancrures 59 permettant le passage des bielles 52 qui le traversent, afin de relier le carter d'échappement 32 aux seconds moyens 41 formant enveloppe extérieure.

Ainsi, les surfaces aérodynamiques 39, 37a, 37b, 37c forment conjointement une surface continue de délimitation interne du flux secondaire Fs.

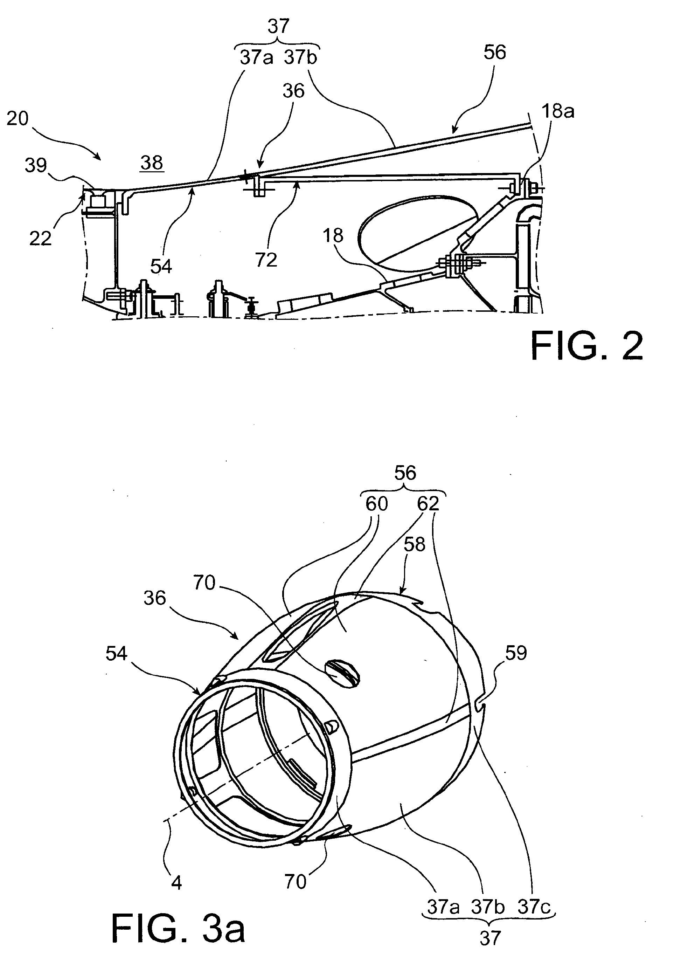

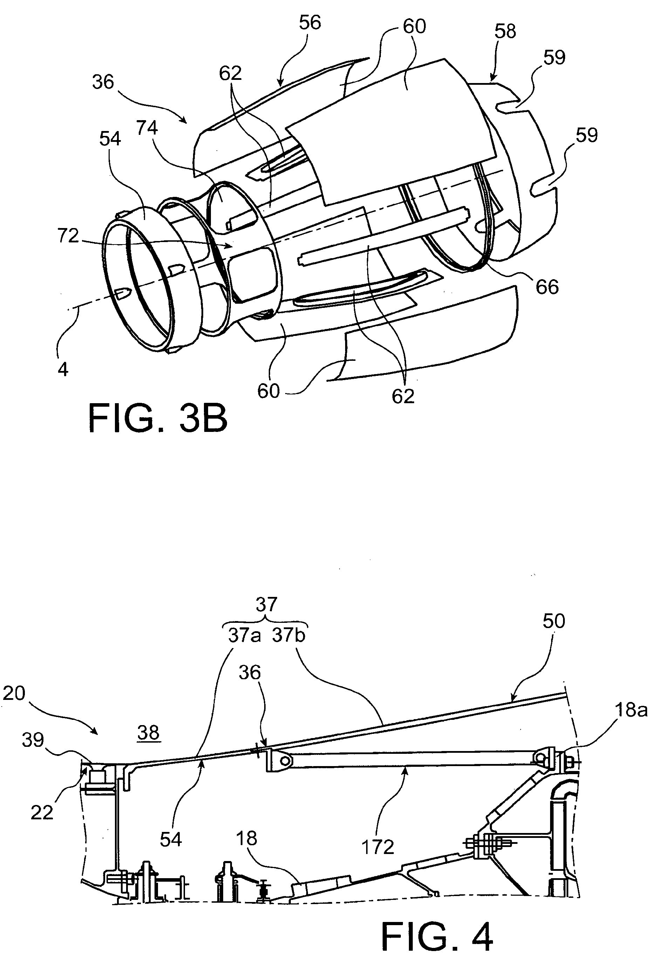

En référence plus particulièrement aux figures 3a et 3b, on peut apercevoir que l'enveloppe principale 56 comporte une pluralité de panneaux aérodynamiques 60 ainsi que des longerons de support 62 portant les panneaux 60. Les longerons 62 sont par exemple au nombre de quatre, répartis à 90°, et s'étendant chacun entre une extrémité avant montée fixement sur l'extrémité arrière de la virole amont structurale 54, et une extrémité arrière montée sur un anneau de support 66 centré sur l'axe 4. Ce support se trouve autour et à proximité d'une jonction entre le carter central 18 et le carter d'échappement 32, en y étant relié par des moyens conventionnels, par exemple du type épingles, montrés schématiquement et référencés 68 sur la figure 1.

Chaque panneau 60 se trouve alors supporté et fixé par deux longerons 62 directement consécutifs, respectivement au niveau de ses deux extrémités circonférentielles. Ses extrémités amont et aval se trouvent quant à elles dans la continuité aérodynamique de la virole amont structurale 54 et de l'anneau 58, respectivement. De plus, ces panneaux 60, qui forment la surface aérodynamique 37b conjointement avec les parties non-recouvertes des longerons 62, sont préférentiellement traités de manière acoustique, et présentent des trous d'homme 70 pour l'accès aux équipements du compartiment 46. A cet égard, il est indiqué que des trous d'homme peuvent également être prévus sur les longerons 62.

L'une des particularités de la présente invention réside dans le fait que le turboréacteur comporte également des moyens structuraux de rigidification du carter central, ces moyens prenant ici la forme d'une structure annulaire ajourée 72. Cette structure 72 en forme de virole, qui s'étend sensiblement parallèlement à l'axe 4, est agencée dans le prolongement arrière de la virole amont structurale 54. Comme cela est visible sur la figure 2, son extrémité avant est en effet montée fixement par brides boulonnées sur l'extrémité arrière de la virole amont structurale 54, au même titre que l'enveloppe principale 56 qui l'entoure. Ainsi, la conception proposée est telle que la virole amont structurale 54, remplissant des fonctions aérodynamique et mécanique, se scinde vers l'arrière en une enveloppe principale 56 assurant la continuité de la fonction aérodynamique, et en une structure annulaire 72 assurant la continuité de la fonction mécanique.

La structure 72 s'étend vers l'arrière selon un diamètre sensiblement constant et identique à celui de la virole amont structurale 54, jusqu'à son extrémité arrière montée fixement par boulons sur la partie annulaire 18a du carter central, située au droit de la zone de jonction 11 entre le rouet centrifuge du compresseur haute pression 10 et la chambre de combustion 12. Cette structure annulaire 72 de rigidification se trouve donc à une distance radiale importante de l'axe 4, lui permettant de n'être que faiblement sollicitée thermiquement.

Des ajours 74 en forme de trous d'homme peuvent être pratiqués sur cette structure, toujours de manière à favoriser l'accès aux équipements du compartiment 46.

Avec cette conception, des efforts importants peuvent transiter successivement à travers le moyeu 30, la virole amont structurale 54, la structure annulaire 72 de rigidification, et le carter central 18, offrant ainsi au carter central une résistance mécanique à la flexion élevée.

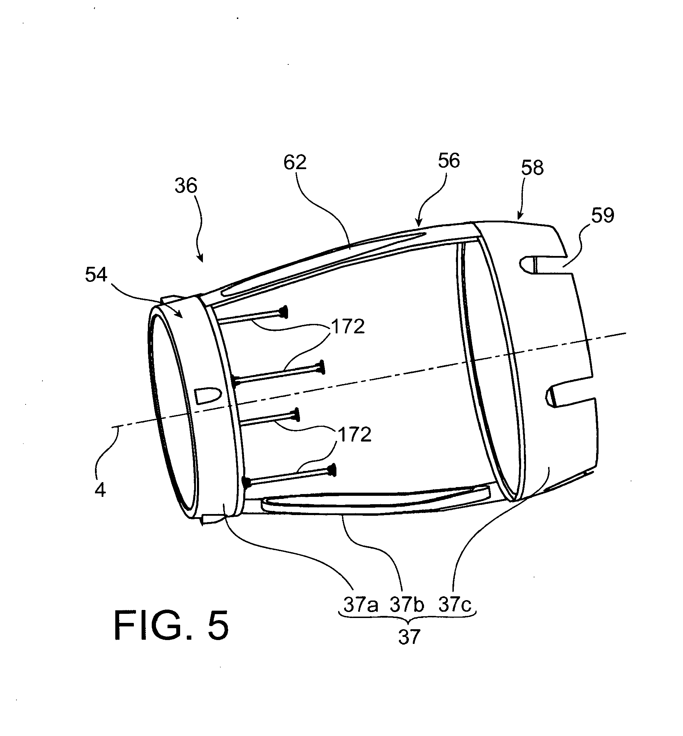

Selon un second mode de réalisation préféré montré sur les figures 4 et 5, la seule modification apportée par rapport au premier mode décrit ci-dessus réside dans la conception des moyens structuraux de rigidification, qui prennent ici la forme d'une pluralité de bielles 172 espacées circonférentiellement les unes des autres, et chacune sensiblement parallèle à l'axe 4.

Bien entendu, diverses modifications peuvent être apportées par l'homme du métier à l'invention qui vient d'être décrite, uniquement à titre d'exemples non limitatifs.

## Revendications

1. Turbomachine à double flux (1) pour aéronef comprenant :
- un carter intermédiaire (20) comportant une virole intérieure (22) et une virole extérieure (24) entre lesquelles sont agencés des bras structuraux (26), la virole intérieure présentant une première surface (39) de délimitation interne d'une veine secondaire annulaire (38) ;
- un carter central (18) prolongeant ledit carter intermédiaire vers l'arrière ; et
- des moyens (36) formant enveloppe agencés dans le prolongement arrière de ladite virole intérieure (22) du carter intermédiaire et disposés autour dudit carter central (18), ces moyens (36) présentant une seconde surface (37) de délimitation interne de la veine secondaire annulaire se situant dans le prolongement arrière de ladite première surface (39) de délimitation interne,
lesdits moyens (36) formant enveloppe comportent d'une part une virole amont structurale (54) montée sur la virole intérieure (22) du carter intermédiaire et définissant la partie avant (37a) de la seconde surface de délimitation interne (37), et d'autre part une enveloppe principale (56) prolongeant vers l'arrière ladite virole amont (54),
**caractérisée en ce que en ce que** ladite turbomachine comporte en outre des moyens structuraux (72, 172) de rigidification du carter central, entourés par ladite enveloppe principale (56), et s'étendant vers l'arrière entre la virole amont (54) et le carter central (18) sur lesquels ces moyens (72, 172) sont montés.

2. Turbomachine selon la revendication 1, **caractérisée en ce que** lesdits moyens structuraux de rigidification du carter central prennent la forme d'une structure annulaire ajourée (72).

3. Turbomachine selon la revendication 1, **caractérisée en ce que** lesdits moyens structuraux de rigidification du carter central prennent la forme d'une pluralité de bielles (172) espacées circonférentiellement les unes des autres.

4. Turbomachine selon l'une quelconque des revendications précédentes, **caractérisée en ce que** lesdits moyens structuraux de rigidification du carter central s'étendent sensiblement parallèlement à l'axe longitudinal (4) de la turbomachine.

5. Turbomachine selon l'une quelconque des revendications précédentes, **caractérisée en ce que** ladite enveloppe principale (56) comporte une pluralité de panneaux aérodynamiques (60) montés sur des longerons de support (62) rapportés à leur extrémité avant sur ladite virole amont structurale (54), et à leur extrémité arrière sur un anneau de support (66) se trouvant à proximité d'une jonction entre ledit carter central (18) et un carter d'échappement (32) le prolongeant vers l'arrière.

6. Turbomachine selon l'une quelconque des revendications précédentes, **caractérisée en ce que** lesdits moyens structuraux (72, 172) de rigidification du carter central sont montés sur une partie (18a) de celui-ci située au droit d'une zone de jonction (11) entre un compresseur (10) et une chambre de combustion (12) de la turbomachine.

7. Turbomachine selon l'une quelconque des revendications précédentes, **caractérisée en ce qu'**elle comprend un compresseur haute pression (10) centrifuge.

## Patentansprüche

1. Doppelströmige Turbomaschine (1) für ein Luftfahrzeug, mit:
- einem Zwischengehäuse (20) mit einem Innenring (22) und einem Außenring (26), zwischen welchen strukturelle Arme (26) angeordnet sind, wobei der Innenring eine erste innere Begrenzungsfläche (39) eines zweiten ringförmigen Gangs (38) aufweist;
- einem mittigen Gehäuse (18), welches das Zwischengehäuse nach hinten verlängert; sowie
- eine Umhüllung bildenden Einrichtungen (36), die in der hinteren Verlängerung des Innenrings (22) des Zwischengehäuses angeordnet und um das mittige Gehäuse (18) herum angebracht sind, wobei die Einrichtungen (36) eine zweite innere Begrenzungsfläche (37) des zweiten ringförmigen Gangs aufweisen, die sich in der hinteren Verlängerung der ersten inneren Begrenzungsfläche (39) befindet,
wobei die eine Umhüllung bildenden Einrichtungen (36) einerseits einen vorgelagerten strukturellen Ring (54) aufweisen, der auf dem inneren Ring (22) des Zwischengehäuses befestigt ist und den vorderen Teil (37a) der zweiten inneren Begrenzungsfläche (37) definiert, und andererseits eine Hauptumhüllung (56) aufweisen, die den vorgelagerten Ring (54) nach hinten verlängert,
**dadurch gekennzeichnet, dass** die Turbomaschine außerdem strukturelle Einrichtungen (72, 172) zur Versteifung des mittigen Gehäuses umfasst, welche von der Hauptumhüllung (56) umgeben sind und sich zwischen dem vorgelagerten Ring (54) und dem mittigen Gehäuse (18) nach hinten erstrecken, wobei die Einrichtungen (72, 172) auf diesen befestigt sind.

2. Turbomaschine gemäß Anspruch 1, **dadurch gekennzeichnet, dass** die strukturellen Einrichtungen zur Versteifung des mittigen Gehäuses die Form einer durchbrochenen Ringstruktur (72) aufweisen.

3. Turbomaschine gemäß Anspruch 1, **dadurch gekennzeichnet, dass** die strukturellen Einrichtungen zur Versteifung des mittigen Gehäuses die Form von mehreren Zwischengliedern (172) aufweisen, die über den Umfang voneinander beabstandet sind.

4. Turbomaschinen gemäß einem der vorhergehenden Ansprüche, **dadurch gekennzeichnet, dass** sich die strukturellen Einrichtungen zur Versteifung des mittigen Gehäuses im Wesentlichen parallel zur Längsachse (4) der Turbomaschine erstrecken.

5. Turbomaschine gemäß einem der vorhergehenden Ansprüche, **dadurch gekennzeichnet, dass** die Hauptumhüllung (56) mehrere aerodynamische Platten (60) aufweist, die auf Längsstützträgern (62) montiert sind, welche mit ihrem vorderen Ende auf den vorgelagerten strukturellen Ring (54) und mit ihrem hinteren Ende auf einen Stützring (66) aufgesteckt sind, der sich in der Nähe einer Verbindung zwischen dem mittigen Gehäuse (18) und einem Entlüftungsgehäuse (32) befindet, die diesen nach hinten verlängert.

6. Turbomaschine gemäß einem der vorhergehenden Ansprüche, **dadurch gekennzeichnet, dass** die strukturellen Einrichtungen (72, 172) zur Versteifung des mittigen Gehäuses auf einem Teil (18a) desselben montiert sind, der sich direkt unter einem Verbindungsbereich (11) zwischen einem Kompressor (10) und einer Verbrennungskammer (12) der Turbomaschine befindet.

7. Turbomaschine gemäß einem der vorhergehenden Ansprüche, **dadurch gekennzeichnet, dass** sie einen Zentrifugalhochdruckkompressor (10) umfasst.

## Claims

1. A dual-flow turbomachine (1) for aircraft including:
- an intermediate casing (20) including an inner ferrule (22) and an outer ferrule (24) between which structural arms (26) are fitted, where the inner ferrule has a first surface (39) internally delimiting an annular secondary vein (38);
- a central casing (18) extending the said intermediate casing towards the rear; and
- means (36) forming a case fitted in the rear extension of the said inner ferrule (22) of the intermediate casing, and positioned around the said central casing (18), where these means (36) have a second surface (37) internally delimiting the annular secondary vein positioned in the rear extension of the said first internal delimitation surface (39),
the said means (36) forming a case include firstly a structural upstream ferrule (54) assembled on the inner ferrule (22) of the intermediate casing, and defining the front portion (37a) of the second internal delimitation surface (37), and secondly a main case (56) extending the said upstream ferrule (54) towards the rear,
**characterised in that** the said turbomachine also includes structural means (72, 172) of rigidifying the central casing, surrounded by the said main case (56), and extending towards the rear between the upstream ferrule (54) and the central casing (18) on which these means (72, 172) are assembled.

2. A turbomachine according to claim 1, **characterised in that** the structural means of rigidifying the central casing take the form of an open-worked annular structure (72).

3. A turbomachine according to claim 1, **characterised in that** the said structural means of rigidifying the central casing take the form of multiple connecting rods (172) spaced circumferentially one from another.

4. A turbomachine according to any of the previous claims, **characterised in that** the said structural means of rigidifying the central casing extend roughly parallel to the lengthways axis (4) of the turbomachine.

5. A turbomachine according to any of the previous claims, **characterised in that** the said main case (56) includes multiple aerodynamic panels (60) assembled on support struts (62) added at their front end on to the structural upstream ferrule (54), and at their rear end on to a support ring (66) located close to a junction between the said central casing (18) and an exhaust casing (32) which extends it towards the rear.

6. A turbomachine according to any of the previous claims, **characterised in that** the said structural means (72, 172) of rigidifying the central casing are assembled on a portion (18a) of the latter located in line with a junction zone (11) between a compressor (10) and a combustion chamber (12) of the turbomachine.

7. A turbomachine according to any of the previous claims, **characterised in that** it includes a centrifugal high-pressure compressor (10).
